# EUROPÄISCHE PATENTANMELDUNG

(11) **EP 2 821 839 A1**
(43) Veröffentlichungstag der Anmeldung: **07.01.2015**
(21) Anmeldenummer: 13174990.5
(22) Anmeldetag: 03.07.2013
(51) Int. Cl.: G02B 27/01, G06K 9/00

(54) **HMD-Vorrichtung mit einstellbarer Eye-Tracking-Einrichtung**

(71) Anmelder: Airbus Defence and Space GmbH, 85521 Ottobrunn (DE)
(72) Erfinder: Liesecke, Stephan, 85521 Ottobrunn (DE); Dreyer, Daniel, 80993 München (DE); Kocvara, Franz, 81673 München (DE)
(74) Vertreter: Rasch, Michael

(57) **Zusammenfassung**

Eine HMD-Vorrichtung mit je einer Abbildungsoptik für die Augen eines Benutzers, die mindestens eine vom jeweiligen zu betrachtende Anzeigeeinheit (12) aufweist, sowie mit einer Einrichtung zur Erfassung der Blickrichtung zumindest eines Auges (10) innerhalb eines Sichtfeldes (14) der Anzeigeeinheit (12) mittels einer Augenkamera (18) ist dadurch gekennzeichnet, dass die Augenkamera (18) mit (42) versehen ist, die in einem Umfangswinkel um eine Sichtmittelachse (16) des Sichtfeldes (14) und in einem Anstellwinkel zur Sichtmittelachse (16) verstellbar ist.

## Beschreibung

Die Erfindung betrifft eine HMD-Vorrichtung mit je einer Abbildungsoptik für beide Augen eines Benutzers, die mindestens eine vom jeweiligen Auge zu betrachtende Anzeigeeinheit aufweist, sowie mit einer Einrichtung zur Erfassung der Blickrichtung zumindest eines Auges innerhalb eines Sichtfeldes der Anzeigeeinheit mittels einer Augenkamera.

Sogenannte HMD-Vorrichtungen (Head-Mounted Display) sind auf den Kopf aufsetzbare Hauben mit zwei kleinen Bildschirmen, die jeweils von einem Auge des Benutzers betrachtet werden. Auf diese Bildschirme wird eine reale oder virtuelle Umgebung unter Berücksichtigung der unterschiedlichen Sichtwinkel beider Augen projeziert. Ferner werden Lageänderungen der HMD-Vorrichtungen erfasst, so dass das dargestellte Bild dementsprechend geändert wird. Beispielsweise wird bei einer Kopfdrehung des Benutzers das entsprechende Bild in dieser realen oder virtuellen Richtung dargestellt. Neuere HMD-Vorrichtungen, wie beispielsweise in der US 6,433,760 offenbart, erfassen ferner die Augenbewegungen des Benutzers (sog. Eye-Tracking-System), um aufgrund dessen das dargestellte Bild analog zur Kopfbewegung in Richtung der Blickrichtung relativ zum Kopf zu ändern. Die Erfassung der Augenstellung bzw. Augenbewegung kann mittels einer ein Auge anblickenden Kamera erfolgen, wobei vorzugsweise die Lage der Pupille mittels Bildbearbeitung bestimmt wird. Zu diesem Zweck wird das Auge mit infrarotem Licht angestrahlt, für welches die Kamera empfindlich ist.

Für eine optimale Positionserfassung des Auges muss die Kamera das gesamte Auge erfassen, wobei das Pupillenabbild bei "Geradeausbtick" möglichst mittig im Bildausschnitt der Kamera liegen sollte. Wenn eine HMD-Vorrichtung mit Eye-Tracking-Einrichtung nur von einer Person benutzt wird, kann eine individuelle Anpassung der Kamerablickrichtung einmalig erfolgen, so dass es auf den erforderlichen Verstellaufwand nicht ankommt. Wird eine derartige HMD-Vorrichtung hingegen von wechselnden Benutzern mit notwendigerweise unterschiedlichen Gesichtseigenschaften wie Augenabstand, Nasen- bzw. Wangenform etc. benutzt, so stellt die schnelle Anpassung der Augenkamera ein Problem dar.

Aufgabe der Erfindung ist es daher, eine HMD-Vorrichtung gemäß dem Oberbegriff des Anspruchs 1 bereitzustellen, die eine schnelle Anpassung der Augenkamera an unterschiedliche Benutzer erlaubt.

Erfindungsgemäß wird diese Aufgabe durch die im Anspruch 1 genannten Merkmale gelöst. Insbesondere wird die Aufgabe gelöst durch eine HMD-Vorrichtung mit je einer Abbildungsoptik für die Augen eines Benutzers, die mindestens eine vom jeweiligen Auge zu betrachtende Anzeigeeinheit aufweist, sowie mit einer Einrichtung zur Erfassung der Blickrichtung zumindest eines Auges innerhalb eines Sichtfeldes der Anzeigeeinheit mittels einer Augenkamera, wobei die Augenkamera mit einer Kamerahalterung versehen ist, die in einem Umfangswinkel um eine Sichtmittelachse des Sichtfeldes und in einem Anstellwinkel zur Sichtmittelachse verstellbar ist.

Die Erfindung ermöglicht eine schnelle und ausreichend genaue Einstellung der Augenkamera, so dass die erfindungsgemäße HMD-Vorrichtung schnell zur Verwendung für verschiedene Benutzer eingerichtet bzw. vorbereitet werden kann und dann eine optimale Erfassung der Augenstellung erfolgen kann. Dabei wird auf die individuellen körperlichen Eigenschaften sowie die optimale horizontale Ausrichtung der Darstellung des Auges eingegangen.

Ein wesentlicher Vorteil ist unter anderem eine schnelle Anpassung der Kameraausrichtung, um in möglichst kurzer Zeit die optimale Aufzeichnung mittels Eye-Tracking-Software zu gewährleisten. Des Weiteren gibt es keine Einschränkung in Bezug auf die physiognomischen Besonderheiten der Benutzers durch das Eye-Tracking-System. Außerdem wird der Tragekomfort der HMD-Vorrichtung beibehalten, da der Schwerpunkt der HMD-Vorrichtung nicht signifikant verändert wird. Zusätzlich kann ein Benutzerprofil für die jeweiligen Benutzer erstellt und angelegt werden, auf welches zügig zugegriffen werden kann, um den Einstellungsprozess des Kamerasystems zu verkürzen. Neben den individuellen Benutzerprofilen kann unter Hilfenahme einer Gesichtserkennungssoftware bei nicht registrierten Benutzern eine grobe Voreinstellung der Kamera vorgenommen werden. Dies würde nur noch eine Feinjustierung des Systems nach sich ziehen, was wiederum zu einer zeitlichen Ersparnis für den Einstellungsprozess führt.

Gemäß einer vorteilhaften Weiterbildung der Erfindung ist zur Verstellung der Augenkamera in Umfangsrichtung ein Umfangspositionsring vorgesehen, welcher das Sichtfeld umgibt und zur Bewegung der Kamerahalterung dient. Ein solcher Umfangspositionsring lässt sich platzsparend montieren, insbesondere wenn vor der Anzeigeeinheit eine Linse angeordnet ist, welche vorzugsweise vom Umfangspositionsring umschließbar ist.

Gemäß einer vorteilhaften Weiterbildung der Erfindung ist die Kamerahalterung manuell entlang zumindest eines Abschnitts des Umfangspositionsrings verstellbar. Eine manuelle Verstellung ist baulich einfach und wenig störanfällig. Vorzugsweise ist die Kamerahalterung dabei in diskreten Rastschritten verstellbar. Die diskreten Rastschritte führen nur zu einer geringen Verschlechterung der Einstellqualität, aber ermöglichen eine reproduzierbare Einstellung. Wenn für einen Benutzer eine bestimmte Stellung bestimmt und vermerkt wurde, lässt sich die Kamerahalterung später unkompliziert auf diesen Rastwert einstellen.

Gemäß einer alternativen vorteilhaften Weiterbildung der Erfindung ist die Kamerahalterung stufenlos elektromotorisch verstellbar ausgebildet. Eine elektromotorische Verstellung ermöglicht eine schnelle Einstellung ohne manuelle Montage und damit ohne Gefahr einer Beschädigung durch falsches Hantieren oder Herabfallen. Insbesondere in Verbindung mit einer Kontrolleinrichtung, welche aktuell das Signal der Augenkamera auswertet und dementsprechend die elektromotorische Verstellung steuert, lässt sich eine schnelle Kameraeinstellung auch bei Erstbenutzern erreichen.

Gemäß einer vorteilhaften Weiterbildung der Erfindung ist die Kamerahalterung an der Anstellwinkeleinheit angebracht, die eine Bewegbarkeit der Augenkamera mit einem Anstellwinkel in einer die Sichtmittelachse umfassenden Ebene ermöglicht. Auf diese Weise lässt sich als zweiter Parameter zusätzlich zum Umfangswinkel der Anstellwinkel einstellen und damit eine optimale Kamerausrichtung erreichen.

Gemäß einer vorteilhaften Weiterbildung ist die Anstellwinkeleinheit in diskreten Rastschritten manuell verstellbar ausgebildet. Besonders bevorzugt wird ein Satz an Anstellwinkeleinheiten für unterschiedliche Anstellwinkel vorgesehen, wobei die Kamerahalterung an eine ausgewählte Anstellwinkeleinheit lösbar ansteckbar ist und die auswählbare Anstellwinkeleinheit lösbar am Umfangspositionsring ansteckbar ist. Somit lässt sich wie bei der Einstellung des Umfangspositionsrings durch Auswahl einer geeigneten Anstellwinkeleinheit reproduzierbar eine Einstellung vornehmen.

Alternativ ist es auch möglich, die Anstellwinkeleinheit so auszubilden, dass verschiedene Winkel entweder stufenlos oder bevorzugt in Rastschritten einstellbar sind.

Beispielsweise können für jeden Benutzer, für den eine Einstellung einmal vorgenommen wurde, die Werte für die Einstellung des Umfangspositionsrings und die Anstellwinkeleinheit gespeichert werden und später dann besonders schnell eine Einstellung für diesen Benutzer vorgenommen werden.

Gemäß einer alternativen vorteilhaften Weiterbildung der Erfindung ist die Anstellwinkeleinheit stufenlos elektromotorisch verstellbar. Insbesondere in Verbindung mit einer elektromotorischen Verstellung der Anstellwinkeleinheit am Umfangspositionsring kann eine weitgehend automatisierte Ausrichtung der Augenkamera erfolgen.

Gemäß einer vorteilhaften Weiterbildung der Erfindung ist mindestens eine Ausleuchteinheit zur Ausleuchtung des Auges für die Augenkamera mit infrarotem Licht vorgesehen. Hierdurch wird ausreichend Licht für die Augenkamera bereitgestellt, da das Innere einer HMD-Vorrichtung zur Vermeidung einer Beeinträchtigung der Sicht meist gegenüber Umgebungslicht abgeschirmt ist. Vorzugsweise werden drei um 120° gegeneinander beabstandete Infrarot-LEDs in einer die Sichtmittelachse senkrecht schneidenden Ebene angeordnet. Diese eine oder mehr Ausleuchteinheiten können vorzugsweise mittels einer Kontrolleinrichtung im Hinblick auf die Leuchtstärke so verstellt werden, dass eine in der Kontrolleinrichtung enthaltene Bildverarbeitungseinheit möglichst optimal die Pupille erfasst.

Gemäß einer vorteilhaften Weiterbildung der Erfindung mit manueller Verstellung ist eine Kontrolleinheit vorgesehen, welche das von der Augenkamera aufgenommene Augenbild auswertet und Korrekturwerte bestimmt und nach außen signalisiert, welche Werte manuell einzustellen sind. So kann insbesondere auf der Anzeigeeinheit ein mittig angeordneter zu betrachtender Punkt angezeigt werden. Anhand des von der Augenkamera erfassten Abbildes der Pupille können in Verbindung mit einer in der Kontrolleinheit gespeicherten Tabelle Korrekturwerte für die beiden Parameter Umfangswinkel und Anstellwinkel ausgegeben werden, beispielsweise auf der Anzeigeeinheit. Dann kann durch manuelle Verstellung um die betreffende Anzahl an Rastpositionen bzw. Austausch der entsprechenden Anstellwinkeleinheit eine optimale Einstellung der Augenkamera erfolgen.

Gemäß einer alternativen vorteilhaften Weiterbildung der Erfindung umfasst die Vorrichtung zwei elektrische Betätigungsvorrichtungen zur Bewegung der Anstellwinkeleinheit entlang des Umfangspositionsrings sowie zur Verstellung der Augenkamera mittels der Anstellwinkeleinheit sowie eine Kontrolleinheit, welche das von der Augenkamera aufgenommene Augenbild auswertet und auf dieser Grundlage die Betätigungsvorrichtungen einstellt. So kann das von der Augenkamera aufgenommene Bild der Pupille nach Bildbearbeitung dazu verwendet werden, in einem Regelkreis die beiden elektrischen Betätigungsvorrichtungen entsprechend anzusteuern und somit sehr schnell eine optimale Einstellung der Augenkamera erfolgen. Auch kann bei Feststellung einer Veränderung während der Benutzung eine Nachjustierung erfolgen.

Gemäß einer vorteilhaften Weiterbildung der Erfindung umfasst die HMD-Vorrichtung zwei Augenkameras für beide Augen und entsprechende Einstelleinrichtungen für die Augenkameras. Somit kann aufgrund der erfassten Augenstellungen eine optimale Bestimmung der Blickrichtung erfolgen, vor allem bei Benutzern mit Augenkrankheiten, bei denen beide Augen nicht gleichartig bewegbar sind.

Gemäß einer alternativen Ausbildung der Erfindung umfasst diese eine Verstellvorrichtung für eine HMD-Vorrichtung mit je einer Abbildungsoptik für die Augen eines Benutzers, die mindestens eine vom jeweiligen Auge zu betrachtende Anzeigeeinheit aufweist, wobei diese Vorrichtung eine Augenkamera zur Erfassung der Blickrichtung zumindest eines Auges innerhalb eines Sichtfeldes der Anzeigeeinheit umfasst, ferner die Augenkamera mit einer Kamerahalterung versehen ist, die in einem Umfangswinkel um eine Sichtmittelachse des Sichtfeldes und in einem Anstellwinkel zur Sichtmittelachse der HMD-Vorrichtung verstellbar ist. Eine derartige Vorrichtung lässt sich vorteilhafterweise an einer HMD-Vorrichtung ohne Eye-Tracking-Funktion, also ohne Augenkamera anbringen und diese damit hinsichtlich des Funktionsumfangs erweitern.

Die Erfindung wird nachfolgend anhand der beigefügten Zeichnungen weiter erläutert. Dabei zeigt:
- Figur 1:: eine schematisch Darstellung des Strahlenverlaufes in einem HMD-Display;
- Figur 2:: eine perspektivische Darstellung einer Vorrichtung zur Verstellung einer Augenkamera in zwei Winkeln;
- Figur 3:: eine perspektivische Darstellung einer Anstellwinkeleinheit;
- Figur 4:: eine Blockbilddarstellung einer Kontrolleinrichtung.

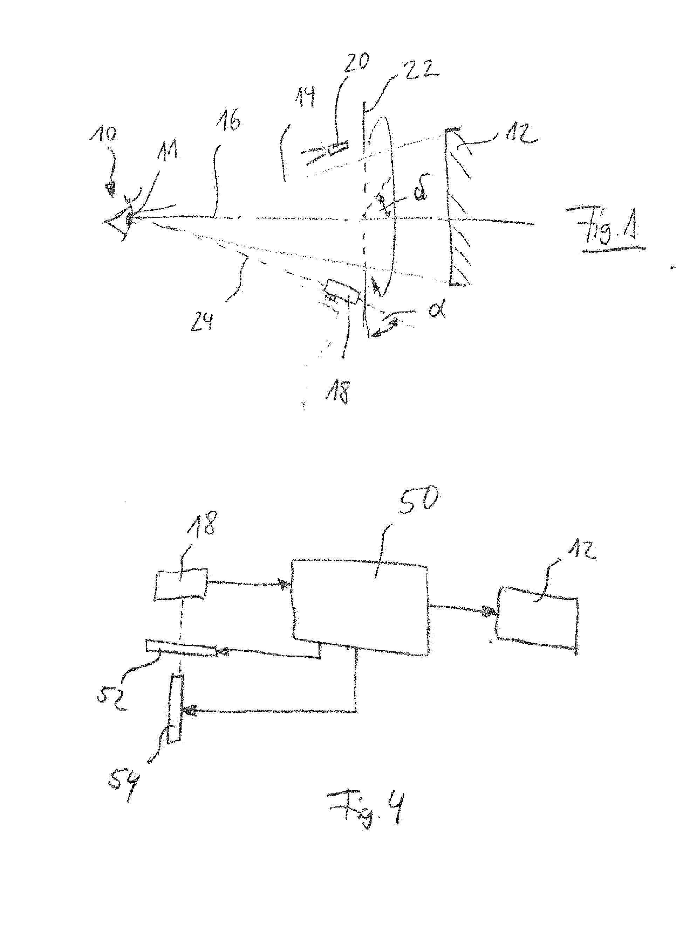

In Figur 1 ist ein Auge 10 des Benutzers mit einer Pupille 11 einer nicht näher dargestellten HMD-Vorrichtung sowie eine Anzeigeeinheit 12 dargestellt. Die HMD-Vorrichtung hat üblicherweise die Form einer überdimensionalen Brille oder einer Haube oder eines Helmes, um die vor den beiden Augen 10 liegenden Anzeigeeinheiten 12 gegenüber dem Kopf des Benutzers zu fixieren, so dass bei Kopfbewegungen die Anzeigeeinheiten 12 immer in der gleichen Lage gegenüber dem Kopf bzw. den Augen 10 verbleibt. Die Anzeigeeinheit 12 für jedes Auge 10 umfasst üblicherweise einen kleinen Bildschirm, meist mit davor angeordneter Linse. Die Anzeigeeinheit 12 definiert dabei ein Sichtfeld 14 mit einer Sichtmittelachse 16.

Eine Augenkamera 18 dient dazu, die Position der Pupille 11 gegenüber dem Auge 10 zu erfassen, um im Rahmen einer Bildverarbeitung festzustellen, wo die Pupille 11 liegt bzw. wohin der Benutzer blickt. Mindestens eine Augenbeleuchtungseinrichtung 20 ist vorgesehen, um das Auge 10 zu beleuchten. Vorzugsweise sind drei über dem Umfang des Sichtfelds 14 gleichmäßig verteilte Infrarot-LEDs vorgehen, um eine möglichst gleichmäßige Ausleuchtung des Auges 10 zu gewährleisten.

Wichtig ist, dass die Augenkamera 18 eine möglichst optimale Sicht auf das Auge 10 erhält, was eine Positionierung der Pupille 11 bei Blick "geradeaus" möglichst mittig im aufgenommenen Bildausschnitt bedeutet. Zu diesem Zweck ist die Lage der Augenkamera 18 mit zwei Parametern gegenüber der Sichtmittelachse 16 veränderbar, zum einen ist der Umfangswinkel δ in einer Ebene 22 senkrecht zur Sichtmittelachse 16 und zum zweiten der Anstellwinkel α, den die Mittelacihse 24 der Augenkamera 18 der Ebene 22 einschließt.

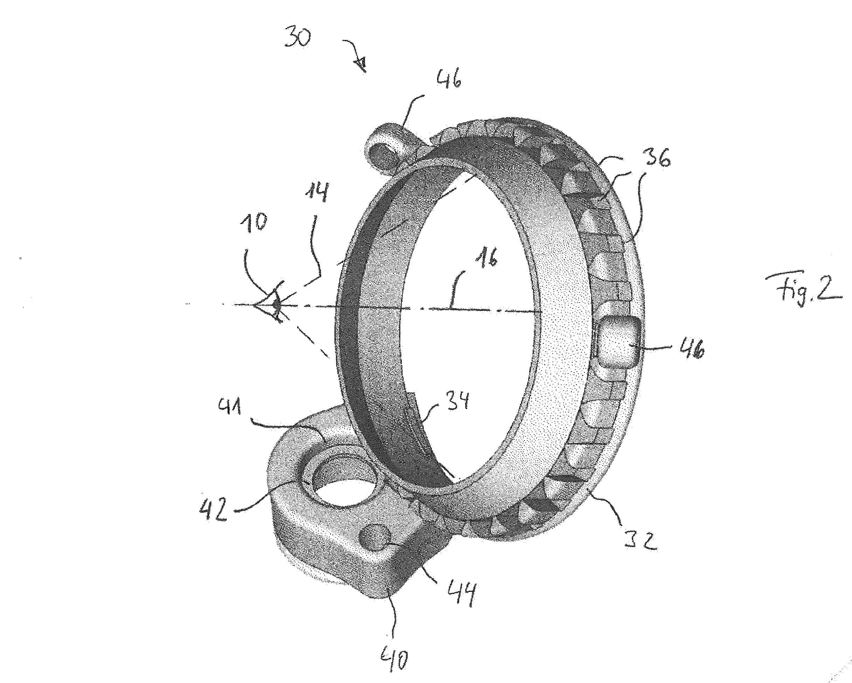

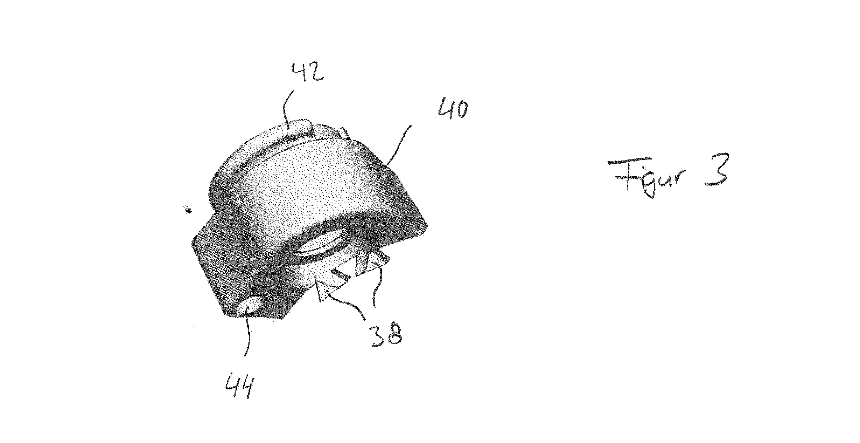

Figur 2 zeigt eine perspektivische Darstellung einer bevorzugten Ausbildung der Erfindung in Form einer Vorrichtung 30 zur Verstellung einer Augenkamera 18 in zwei Winkeln. Diese umfasst einen Umfangspositionsring 32, der das Sichtfeld 14 umschließt und vorzugsweise eine nicht dargestellte Linse einer nicht dargestellten HMD-Vorrichtung umschließt bzw. daran befestigt ist, beispielsweise mittels Kleben oder eine solche Linse hintergreifenden Rastvorsprüngen 34. Am Umfang des Umfangspositionsrings 32 sind in der dargestellten Ausführungsform verteilte Schwalbenschwanz-Nuten 36 ausgebildet, in die aus der Sichtmittelachse 16 entsprechend geformte Schwalbenschwanz-Gegenstücke 38 einsteckbar sind. Eine Anstellwinkeleinheit 40 - die in einer anderen Perspektive in Figur 3 gezeigt ist - weist derartige Schwalbenschwanz-Gegenstücke 38 auf, mittels der diese auf den Umfangspositionsring 32 aufsteckbar ist. Bei der dargestellten Ausführungsform sind zweiunddreißig Schwalbenschwanz-Nuten 36 ausgebildet, so dass die Anstellwinkeleinheit 40 in zweiunddreißig verschiedenen Stellungen mit entsprechend zweiunddreißig verschiedenen Winkeln δ einsteckbar ist. Es können natürlich auch mehr oder weniger als zweiunddreißig Schwalbenschwanz-Nuten 36 vorgesehen werden oder andere Fixierformen als Schwalbenschwanz-Formgebungen.

Die Anstellwinkeleinheit 40 umfasst neben den Schwalbenschwanz-Gegenstücken 38 einen Kamerahalterungs-Aufnahmekanal 41 zur Aufnahme einer Kamerahalterung 42, welche eine in Figur 2 nicht dargestellte Augenkamera 18 aufnimmt. Ferner ist eine Haltebohrung 44 für eine LED zur Beleuchtung des Auges 10 mit infrarotem Licht dargestellt.

Ferner sind vorzugsweise zwei separate LED-Halterungen 46 zur Aufnahme nicht gezeigter LEDs vorgesehen, die ebenfalls nicht gezeigte Schwalbenschwanz-Gegenstücke (analog den in Figur 3 gezeigten Schwalbenschwanz-Gegenstücken 38) aufweisen und in geeignete Schwalbenschwanz-Nuten 36 einsteckbar sind. In der darstellten Ausführungsform sind die beiden LED-Halterungen 46 bezüglich des Kamerahalterungs-Aufnahmekanals 41 hinsichtlich der Sichtmittelachse 16 um 120° beabstandet, um eine optimale Ausleuchtung des Auges 10 zu erreichen.

In den Figuren 2 und 3 ist nur eine Ausführungsform einer Anstellwinkeleinheit 40 dargestellt, die eine Ausrichtung der Augenkamera 18 in einem konkreten Anstellwinkel zur Sichtmittelachse 16 erlaubt. Vorzugsweise ist daher ein Satz verschiedener Anstellvvinkeleinheiten 40 vorgesehen, die sich durch den Anstellwinkel unterschieden, also für unterschiedliche Anstellwinkel α ausgebildet sind.

Zur Einstellung der Augenkamera 18 wird zunächst eine Grundeinstellung für die beiden Winkel vorgenommen oder die vorhandene Stellung verwendet. Auf der Anzeigeeinheit 12 werden dazu geeignete Markierungen angebracht, die der Benutzer zu fixieren hat. Anschließend wird die Stellung der Pupille 11 von der Augenkamera 18 erfasst und in einer Kontrolleinheit ausgewertet. Anhand der gemessenen Abweichung der Pupille 11 von der Bildmitte wird vorzugsweise anhand einer gespeicherten Tabelle ermittelt, welche Änderungen der beiden Parameter (Umfangswinkel und Anstellwinkel) erforderlich sind. Es werden dem Benutzer, vorzugsweise durch Anzeige in der Anzeigeeinheit 12, entweder inkrementale Informationen übermittelt, also um wie viel der jeweilige Winkel geändert werden muss oder Absolutwerte der einzustellenden Winkel. Beispielsweise können die verschiedenen Anstellwinkeleinheiten 40 durchnummeriert sein und dann muss nur die entsprechende Kennziffer ausgegeben werden. In gleicher Weise sind sinnvollerweise an den Schwalbenschwanz-Nuten 36 entsprechende Kennzeichnungen, insbesondere Nummern, angebracht.

Nach Abnahme der HMD-Vorrichtung wird dann einfach die Anstellwinkeleinheit 40 aus dem Umfangspositionsring 32 axial herausgezogen, ferner die Kamerahalterung 42 mit einer montierten Augenkamera 18 ebenfalls axial aus dem Kamerahalterungs-Aufnahmekanal 41 herausgenommen. Eine andere Anstellwinkeleinheit 40 mit dem korrekten Anstellwinkel α wird genommen und die Kamerahalterung 42 mit montierter Augenkamera 18 in den Kamerahalterungs-Aufnahmekanal 41 gesteckt. Anschließend wird gemäß der vorgegebenen Umfangswinkel-Stellung die Anstellwinkeleinheit 40 mit ihren Schwalbenschwanz-Gegenstücken 38 in die korrekten Schwalbenschwanz-Nuten 36 eingesteckt. Vorzugsweise werden die LED-Halterungen 46 dann ebenfalls entsprechend umgesteckt.

In Figur 4 ist ein Blockschaltbild einer Kontrolleinrichtung 50 dargestellt, die von der Augenkamera 18 beaufschlagt wird und deren Bild auswertet. Insbesondere umfasst die Kontrolleinrichtung 50 ein Bildverarbeitungssoftware, um aus dem von der Augenkamera 18 aufgenommenen Bild die Lage der Pupille 11 zu ermitteln. Die Kontrolleinheit errechnet für den normalen Betrieb der HMD-Vorrichtung die Ausrichtung der Pupille 11 und stellt das betreffende Signal bereit für entsprechende Anwendungen, z.B. die Darstellung einer virtuellen Umgebung auf der Anzeigeeinheit 12.

Bei einer Ausführungsform mit elektromotorischem Antrieb für die Einstellung von Anstellwinkel α und Umfangswinkel δ ist eine elektromotorische Umfangswinkeleinstellvorrichtung 52 und eine elektromotorische Anstellwinkeleinstellvorrichtung 54 vorgesehen. Während der Einstellphase der Augenkamera 18 werden die Einstellvorrichtungen 52, 54 derart angesteuert, dass die Augenkamera 18 entsprechend verstellt wird, so dass das erzeugte Pupillenbild mittig im Bild angeordnet ist.

## Patentansprüche

1. HMD-Vorrichtung mit je einer Abbildungsoptik für die Augen eines Benutzers, die mindestens eine vom jeweiligen Auge zu betrachtende Anzeigeeinheit (12) aufweist, sowie mit einer Einrichtung zur Erfassung der Blickrichtung zumindest eines Auges (10) innerhalb eines Sichtfeldes (14) der Anzeigeeinheit (12) mittels einer Augenkamera (18), **dadurch gekennzeichnet, dass** die Augenkamera (18) mit einer Kamerahalterung (42) versehen ist, die in einem Umfangswinkel um eine Sichtmittelachse (16) des Sichtfeldes (14) und in einem Anstellwinkel zur Sichtmittelachse (16) verstellbar ist.

2. HMD-Vorrichtung nach Anspruch 1, **dadurch gekennzeichnet, dass** zur Verstellung der Augenkamera (18) in Umfangsrichtung ein Umfangspositionsring (32) vorgesehen ist, welcher das Sichtfeld (14) umgibt zur Bewegung der Kamerahalterung (42) entlang des Umfangspositionsrings (32).

3. HMD-Vorrichtung nach Anspruch 2, **dadurch gekennzeichnet, dass** die Kamerahalterung (42) manuell entlang zumindest eines Abschnitts des Umfangspositionsrings (32) verstellbar ist.

4. HMD-Vorrichtung nach Anspruch 3, **dadurch gekennzeichnet, dass** die Kamerahalterung (42) in diskreten Rastschritten manuell verstellbar ist.

5. HMD-Vorrichtung nach Anspruch 2, **dadurch gekennzeichnet, dass** die Kamerahalterung (42) stufenlos elektromotorisch verstellbar ist.

6. HMD-Vorrichtung nach Anspruch 2, **dadurch gekennzeichnet, dass** die Kamerahalterung (42) an der Anstellwinkeleinheit (40) angebracht ist, die eine Bewegbarkeit der Augenkamera (18) mit einem Anstellwinkel (α) in einer die Sichtmittelachse (16) umfassenden Ebene ermöglicht.

7. HMD-Vorrichtung nach Anspruch 6, **dadurch gekennzeichnet, dass** die Anstellwinkeleinheit (40) in diskreten Rastschritten manuell verstellbar ist.

8. HMD-Vorrichtung nach Anspruch 7, **dadurch gekennzeichnet, dass** ein Satz Anstellwinkeleinheiten (40) für unterschiedliche Anstellwinkel vorgesehen ist, und die Kamerahalterung (42) an eine auswählbare Anstellwinkeleinheit (40) lösbar ansteckbar ist und die auswählbare Anstellwinkeleinheit (40) lösbar am Umfangspositionsring (32) ansteckbar ist.

9. HMD-Vorrichtung nach Anspruch 6, **dadurch gekennzeichnet, dass** die Anstellwinkeleinheit (40) stufenlos elektromotorisch verstellbar ist.

10. HMD-Vorrichtung nach einem oder mehreren der vorherigen Ansprüche,
**dadurch gekennzeichnet, dass** mindestens eine Ausleuchteinheit (20) zur Ausleuchtung des Auges (10) für die Augenkamera (18) mit infrarotem Licht vorgesehen ist.

11. HMD-Vorrichtung nach nach Anspruch 4 und 8, **dadurch gekennzeichnet, dass** diese eine Kontrolleinheit umfasst, welche das von der Augenkamera (18) aufgenommene Augenbild auswertet und Korrekturwerte bestimmt und signalisiert, welche manuell einstellbar sind.

12. HMD-Vorrichtung nach Anspruch 5 und 9, **dadurch gekennzeichnet, dass** diese zwei elektrische Einstellvorrichtungen (52, 54) zur Bewegung der Anstellwinkeleinheit (40) entlang des Umfangspositionsrings (32) sowie zur Verstellung der Augenkamera (18) mittels der Anstellwinkeleinheit (40) umfasst, sowie eine Kontrolleinheit (50), welche das von der Augenkamera (18) aufgenommene Augenbild auswertet und auf dieser Grundlage die Einstellvorrichtungen (52, 54) einstellt.

13. HMD-Vorrichtung nach einem oder mehreren der vorherigen Ansprüche,
**dadurch gekennzeichnet, dass** diese zwei Augenkameras (18) für beide Augen (10) und entsprechende Einstelleinrichtungen (52, 54) für die Augenkameras (18) umfasst.

14. Verstellvorrichtung für eine HMD-Vorrichtung mit je einer Abbildungsoptik für die Augen eines Benutzers, die mindestens eine vom jeweiligen Auge zu betrachtende Anzeigeeinheit (12) aufweist, **dadurch gekennzeichnet, dass** diese eine Augenkamera (18) zur Erfassung der Blickrichtung zumindest eines Auges (10) innerhalb eines Sichtfeldes (14) der Anzeigeeinheit (12) umfasst, wobei die Augenkamera (18) mit einer Kamerahalterung (42) versehen ist, die in einem Umfangswinkel um eine Sichtmittelachse (16) des Sichtfeldes (14) und in einem Anstellwinkel zur Sichtmittelachse (16) der HMD-Vorrichtung verstellbar ist.
